# EUROPÄISCHE PATENTSCHRIFT

(11) **EP 1 076 192 B1**
(45) Veröffentlichungstag und Bekanntmachung des Hinweises auf die Patenterteilung: **11.06.2003**
(21) Anmeldenummer: 00117188.3
(22) Anmeldetag: 11.08.2000
(51) Int. Cl.: F16H 59/02, F16H 61/12

(54) **Steuereinrichtung für automatisch und manuell schaltbare Getriebe**
Control device for automatic and manually shifted transmissions
Dispositif de commande pour boites de vitesses automatiques et manuelles

(30) Priorität: 13.08.1999 DE 19938528
(43) Veröffentlichungstag der Anmeldung: 14.02.2001
(73) Patentinhaber: AUDI AG, 85045 Ingolstadt (DE)
(72) Erfinder: Bömelburg, Frank, 85117 Eitensheim (DE)

(56) Entgegenhaltungen:
- EP-A- 0 895 003
- EP-A- 0 899 479
- US-A- 5 406 860
- US-A- 5 584 209

## Beschreibung

Die Erfindung betrifft eine Steuereinrichtung für automatisch und manuell schaltbare Geschwindigkeits-Wechselgetriebe in Kraftfahrzeugen, gemäß dem Oberbegriff des Patentanspruches 1.

Eine derartige Steuereinrichtung beschreibt die EP 0 899 479 A1, bei der für die Steuerung der manuellen Schaltbetätigungen ferner eine Fehlererkennung vorgesehen ist, mittels der Leitungsunterbrechungen oder andere Fehler in der Tippschaltung erkennbar sind. Die Tippschalter sind Schalter mit zweipoligem Ausgang, deren jeweiliger Schaltzustand erfassbar und in einer logischen Auswerteschaltung überprüfbar ist. Fehler können allerdings nur bei der jeweiligen Schaltbetätigung erkannt werden.

Aus der US 5,406,860 A ist es zudem bei einer Getriebesteuereinrichtung bekannt, für die Signalerkennung der Wählhebelstellungen sogenannte Hall Sensoren zu verwenden.

Aufgabe der Erfindung ist es, eine Steuereinrichtung der gattungsgemäßen Art vorzuschlagen, bei der in einfacher Weise die Funktionalität in der Signalübertragung der Steuerung für die manuelle Schaltbetätigung überprüfbar ist.

Diese Aufgabe wird mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass zumindest ein weiterer Positionsgeber an dem Wählhebel der Getriebesteuerung vorgesehen ist, der mit dem Wählhebel bewegbar außerhalb der Position für manuelle Schaltungen durch Betätigen von Tippschaltern Prüfsignale auf die Signalleitungen der Steuerung für manuelle Schaltungen aufschaltet, wobei bei Ausbleiben eines oder mehrerer der Prüfsignale eine Fehlermeldung ausgelöst wird. Es erfolgt somit bereits beim Inbetriebsetzen des Kraftfahrzeuges beim Herausschalten z.B. aus der Parkposition P und vor dem Einschalten der Vorwärtsfahrposition D durch einen zusätzlichen Positionsgeber eine Überprüfung der manuellen Steuerung, bevor in diese überhaupt geschaltet werden kann. Sollte in der Signalübertragung der manuellen Steuerung ein Fehler vorliegen, so wird die Bedienungsperson des Kraftfahrzeuges bereits vor dem Schalten in die manuelle Steuerung optisch oder akustisch durch eine Fehlermeldung aufmerksam gemacht.

Bei einer Auslösung der manuellen Steuerung mit Hallgebern als Positionsgeber kann ein entsprechend positionierter, mit dem Wählhebel bewegbarer weiterer Dauermagnet vorgesehen sein, der in den Positionen des Wählhebefs, die dem Automatikfahrbereich zugeordnet sind, Schaltsignale in der manuellen Steuerung auslöst. Über die Auswerteschaltung wird dabei erkannt, daß dies keine Schaltsignale, sondern Prüfsignale sind.

Die Auswerteschaltung kann bevorzugt einen Frequenzgenerator ansteuern, der dann auf die Signalleitungen ein definiert erkennbares Störsignal aufschaltet, das im elektronischen Steuergerät der Getriebesteuerung die Fehlermeldung auslöst.

Der weitere Positionsgeber bzw. Dauermagnet kann zudem bevorzugt an einer den Wählhebel-Schwenkbereich in der Wählhebelanordnung abdekkenden Jalousie angeordnet sein. Da sich diese mit dem Wählhebel verschiebt und im gesamten Bereich des Wählhebel-Schwenkbereiches angeordnet ist, kann der Dauermagnet problemlos so angeordnet werden, daß er in dem vorgesehenen Prüfbereich Signale an der manuellen Steuerung auslöst, bei aktivierter manueller Steuerung jedoch außerhalb des Bereiches der Hallgeber liegt und somit wirkungslos ist.

Neben der akustischen und/oder optischen Warnsignale kann die Fehlermeldung auch in einem auslesbaren Fehlerspeicher des elektronischen Steuergerätes gespeichert und bei Wartungsarbeiten am Kraftfahrzeug entsprechend ausgewertet werden.

Ein Ausführungsbeispiel der Erfindung ist im folgenden mit weiteren Einzelheiten näher erläutert. Die schematische Zeichnung zeigt in
- Fig. 1: eine Draufsicht auf eine Wählhebelanordnung für ein automatisches und manuell schaltbares Geschwindigkeits-Wechselgetriebe in einem Kraftfahrzeug; und
- Fig. 2: ein elektrisches Blockschaltbild der Steuereinrichtung zur Überprüfung der Funktionalität der manuellen Steuerung des Getriebes.

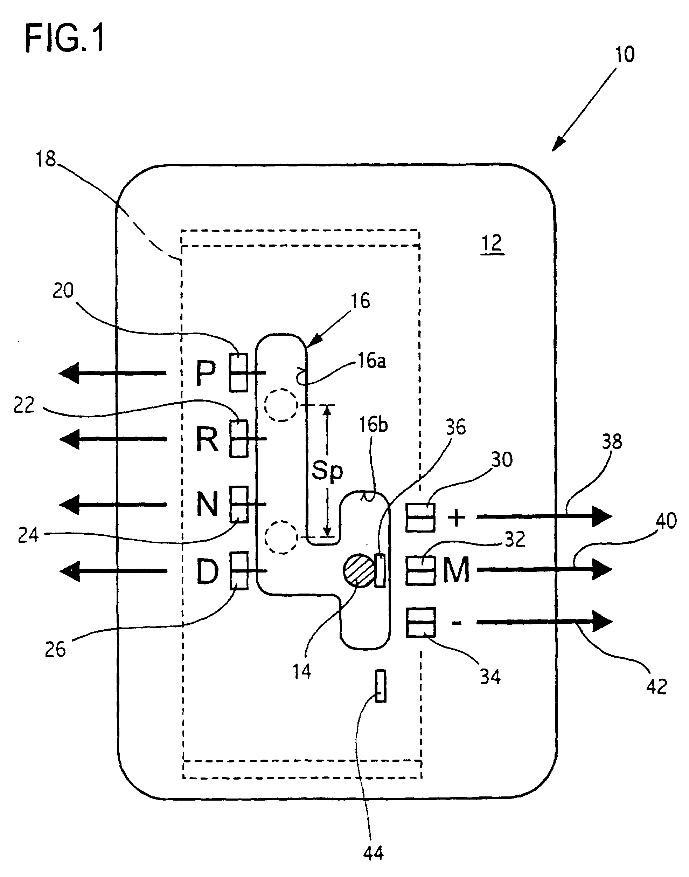

Die Fig. 1 zeigt eine an einer Mittelkonsole eines Kraftfahrzeuges angeordnete Wählhebelanordnung 10 mit einer oberen Abdeckung 12, durch die sich ein abgeschnitten dargestellter Wählhebel 14 eines automatisch und manuell schaltbaren Geschwindigkeits-Wechselgetriebes, beispielsweise eines CVT-Getriebes, erstreckt.

Der Wählhebel 14 ist im Bereich der vorgegebenen Wählhebel-Kulisse 16 verschwenkbar gelagert und kann innerhalb des Kulissenabschnittes 16a von der Parkposition P in die Positionen R für Rückwärts, N für Neutral und D für automatischen Vorwärts-Fahrmodus bewegt werden, wobei in bekannter Weise Rasten für die einzelnen Positionen vorgesehen sind.

Von der Position D kann der Wählhebel 14 quer in den Kulissenabschnitt 16b in die Position M für manuellen Schaltbetrieb geschwenkt werden.

Aus der Position M schließlich kann der Wählhebel 14 jeweils selbsttätig zurückfedernd in die Positionen +, - gedrückt werden, wodurch in einem Schrittschaltmodus Herauf- oder Herunterschaltungen manuell ausgelöst werden.

Die Wählhebel-Kulisse 16 ist durch eine gestrichelt dargestellte Jalousie 18 ständig abgedeckt, die unterhalb der Abdeckung 12 verschiebbar geführt und von dem Wählhebel 14 durchdrungen ist.

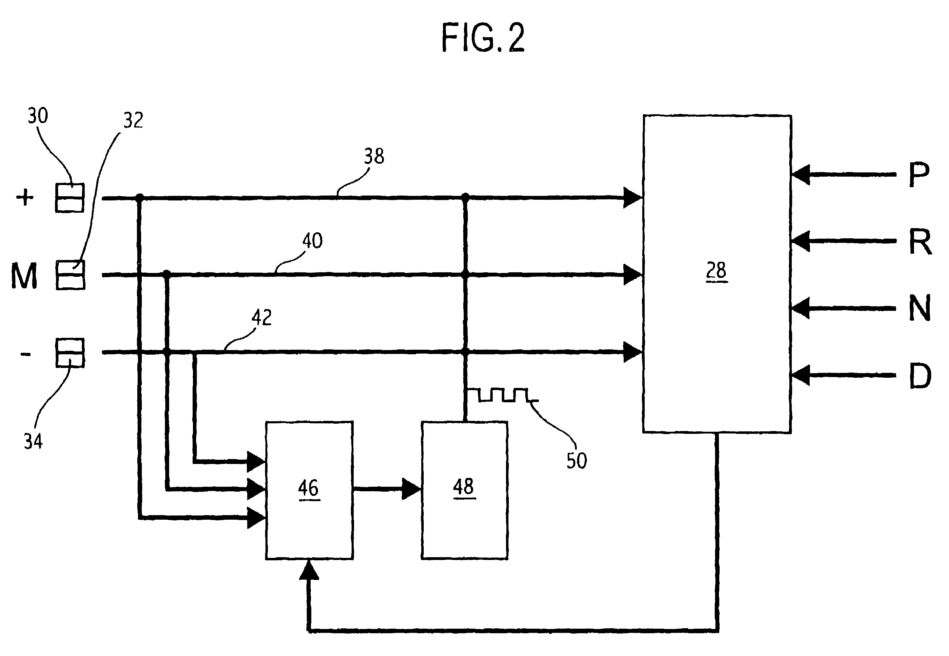

Der Wählhebel 14 ist mechanisch in nicht dargestellter Weise über ein Gestänge oder einen Seilzug mit dem Getriebe des Kraftfahrzeuges verbunden. In diesem Übertragungsweg (das kann wie im Ausführungsbeispiel gezeigt in der Wählhebelanordnung 10 oder alternativ innerhalb des Getriebes sein) sind Positionsgeber 20,22,24,26 vorgesehen, die entsprechende elektrische Signale in den Positionen P, R, N, D des Wählhebels 14 an eine elektronische Getriebesteuerung 28 (Fig. 2) abgeben. Die Art und Anordnung dieser Positionsgeber 20 - 26 ist nicht Gegenstand der vorliegenden Erfindung und deshalb auch nicht näher beschrieben.

Ferner sind in der Wählhebelanordnung 10 Positionsgeber bzw. nach dem Hall-Prinzip funktionierende Hallgeber 30,32,34 angeordnet, die über einen an dem Wählhebel 14 vorgesehenen Dauermagneten 36 in den Wählhebelpositionen M, +, - aktivierbar sind und ebenfalls über elektrische Leitungen 38,40,42 ein entsprechendes elektrisches Signal an die elektronische Steuerung 28 abgeben.

An der Jalousie 18 ist ein weiterer Positionsgeber bzw. Dauermagnet 44 so angeordnet, daß er in dem mit s_{P} bezeichneten Schwenkbereich des Wählhebels 14 (der Bereich s_{P} liegt außerhalb der Positionen P und D in dem dazwischenliegenden Kulissenabschnitt 16a) die Hallgeber 30,32,34 hintereinander aktiviert und entsprechende elektrische Signale an die elektronische Getriebesteuerung 28 auslöst.

Diese (Prüf-) Signale werden von der elektronischen Getriebesteuerung 28 ignoriert, da diese manuelle Schaltsignale nur akzeptiert, wenn nach P (=Fahrzeugstart und/oder Start-/Prüfablauf) das Signal D durch den Positionsgeber 26 angelegen hat.

Tritt andererseits beim Schwenken des Wählhebels 14 von P nach D beim elektrischen Steuergerät 28 kein (Prüf-)Signal von den Hallgebern 30,32,34 auf, so könnte das Steuergerät 28 bereits eine Störung erkennen und eine entsprechende Fehlermeldung generieren. Die Fehlermeldung könnte auf einen Defekt der Positionsgeber 30,32,34 oder auf eine Leitungsunterbrechung bei den elektrischen Leitungen 38,40,42 oder mit diesen verbundenen Leitungssteckern schließen lassen.

Die Fehlermeldung kann z. B. eine akustische Warnung durch einen Summer und/oder eine optische Warnung durch eine blinkende oder ständig leuchtende Warnleuchte sein. Femer kann die Fehlermeldung in an sich bekannter Weise in einen auslebaren Fehlerspeicher der elektronischen Steuerung 28 eingegeben werden, so daß ggf. nur sporadisch auftretende Störungen (z. B. aufgrund eines Wackelkontaktes) bei Wartungsarbeiten am Kraftfahrzeug erfaßbar sind.

Im Ausführungsbeispiel ist an die Leitungen 38,40,42 eine elektronische Auswerteschaltung 46 angeschlossen, die logisch verknüpft mit dem Steuergerät 28 das (Prüf-) Signal der Hallgeber 30,32,34 im Prüfablauf s_{P} auswertet und bei einem Defekt über einen Frequenzgenerator 48 (z. B. einem Schwingkreistransitor) ein frequenzmoduliertes Rechtecksignal 50 aufschaltet. Dieses Signal 50 löst wiederum die beschriebene Fehlermeldung aus.

## Patentansprüche

1. Steuereinrichtung für ein automatisch und manuell schaltbares Geschwindigkeits-Wechselgetriebe in einem Kraftfahrzeug, mit einem Wählhebel (14) zur Einstellung zumindest der Positionen Vorwärts, Neutral, Rückwärts und einer Position M für manuelle Schaltungen durch Betätigen von Tippschaltern (30, 34) in dieser Position, wobei zur Steuerung des Getriebes über Positionsgeber (44) und Signalleitungen (38, 40, 42) an ein elektronisches Steuergerät (28) entsprechende Positionssignale sowie Signale zum manuellen Herauf- oder Herunterschalten der Getriebeübersetzungen abgegeben werden, wobei für das manuelle Herauf- oder Herunterschalten eine Fehlererkennung in dem Steuergerät (28) vorgesehen ist, **dadurch gekennzeichnet, dass** zumindest ein weiterer Positionsgeber (44) vorgesehen ist, der mit dem Wählhebel (14) bewegbar außerhalb der Position M für manuelle Schaltungen durch Betätigen von Tippschaltern (30, 34) in dieser Position Prüfsignale auf die Signalleitungen (38,40,42) der Steuerung für manuelle Schaltungen aufschaltet, wobei bei Ausbleiben eines oder mehrerer der Prüfsignale eine Fehlermeldung ausgelöst wird.

2. Steuereinrichtung nach Anspruch 1, **dadurch gekennzeichnet, daß** der Wählhebel (14) in Reihenfolge der Positionen P (Parksperre), R (Rückwärts), N (Neutral), D (automatische Vorwärtsfahrt) und M (manuelle Steuerung) oder umgekehrt bewegbar ist und daß die Prüfsignale des weiteren Positionsgebers (44) außerhalb der Positionen P und D aufschaltbar sind.

3. Steuereinrichtung nach Anspruch 1 oder 2, **dadurch gekennzeichnet, daß** zumindest der Positionsgeber für die Position M des Wählhebels (14), die Tippschalter und der weitere Positionsgeber Hallgeber (30,32,34) mit entsprechend mit dem Wählhebel (14) bewegbaren Dauermagneten (36,44) sind.

4. Steuereinrichtung nach einem oder mehreren der Ansprüche 1 bis 3, **dadurch gekennzeichnet, daß** der weitere Positionsgeber bzw. Dauermagnet (44) an einer den Wählhebel-Schwenkbereich (Kulisse 16) abdekkenden Jalousie (18) angeordnet ist.

5. Steuereinrichtung nach einem oder mehreren der Ansprüche 1 bis 4, **dadurch gekennzeichnet, daß** eine Auswerteschaltung (46) mit einem Frequenzgenerator (48) vorgesehen ist, die im elektronischen Steuergerät (28) der Getriebesteuerung die Fehlermeldung aktiviert.

6. Steuereinrichtung nach einem oder mehreren der Ansprüche 1 bis 5, **dadurch gekennzeichnet, daß** die Fehlermeldung ein akustisches und/oder optisches Warnsignal auslöst.

7. Steuereinrichtung nach einem oder mehreren der Ansprüche 1 bis 6, **dadurch gekennzeichnet, daß** die Fehlermeldung in einem auslesbaren Fehlerspeicher gespeichert wird.

## Claims

1. A control device for an automatically and manually shiftable speed-change transmission in a motor vehicle, comprising a selector lever (14) for selecting at least the positions Drive, Neutral, Reverse and a position M for manual shifting by activation of touch switches (30, 34) in this position, position signals corresponding to said positions and signals for manual upshifting or downshifting of the gear ratios being sent via position detectors (44) and signal lines (38, 40, 42) to an electronic control unit (28) for controlling the transmission, error detection means being provided in the control unit (28) for the manual upshifting or downshifting, **characterised in that** at least one further position detector (44) is provided which is movable with the selector lever (14) outside the position M for manual shifting and through activation of touch switches (30, 34) in this position feeds test signals to the signal lines (38, 40, 42) of the control system for manual shifting, an error message being triggered should one or more of the test signals fail to occur.

2. A control device according to Claim 1, **characterised in that** the selector lever (14) is movable in the sequence of the positions P (parking lock), R (reverse), N (neutral), D (automatic forward drive) and M (manual control) or vice versa, and **in that** the test signals of the further position detector (44) are feedable outside the positions P and D.

3. A control device according to Claim 1 or 2, **characterised in that** at least the position detector for the position M of the selector lever (14), the touch switches and the further position detector are Hall effect sensors (30, 32, 34) with permanent magnets (36, 44) which are correspondingly movable with the selector lever (14).

4. A control device according to one or more of claims 1 to 3, **characterised in that** the further position detector or permanent magnet (44) is arranged on a blind (18) covering the swivelling range (slot 16) of the selector lever.

5. A control device according to one or more of claims 1 to 4, **characterised in that** an evaluation circuit (46) having a frequency generator (48) is provided, which evaluation circuit (46) activates the error message in the electronic control unit (28) of the transmission control system.

6. A control device according to one or more of claims 1 to 5, **characterised in that** the error message triggers an acoustic and/or optical alarm signal.

7. A control device according to one or more of claims 1 to 6, **characterised in that** the error message is stored in an error memory which can be read out.

## Revendications

1. Dispositif de commande pour des boîtes de vitesses à manoeuvre automatique et manuelle dans un véhicule automobile, avec un levier de sélection (14) pour régler au moins les positions de marche avant, neutre, marche arrière et une position M pour des manoeuvres manuelles par des actionnements de touche d'impulsion (30, 34) dans cette position, où, pour assurer la commande de la boîte de vitesses par l'intermédiaire d'un capteur de position (44) et de lignes de signalisation (38, 40, 42), à un appareil de commande (28) électronique sont fournis des signaux de position correspondants ainsi que des signaux pour la manoeuvre de montée ou de descente des vitesses dans les rapports de transmission de la boîte, sachant que, pour la manoeuvre de montée ou de descente des vitesses, est prévue dans l'appareil de commande (28) une identification de défaut, **caractérisé en ce qu'**au moins un autre capteur de position (44) est prévu qui, avec le levier de sélection (14) déplaçable hors de la position M pour les manoeuvres manuelles, par un actionnement des interrupteurs à impulsion (30, 34), fournit des signaux d'essai dans cette position aux lignes de signalisation (38, 40, 42) de la commande pour procéder à des branchements manuels, sachant que, lorsqu'un ou plusieurs des signaux de contrôle manque, une information de défaut est déclenchée.

2. Dispositif de commande selon la revendication 1, **caractérisé en ce que** le levier de sélection (14) est déplaçable dans l'ordre de succession des positions P (stationnement), R (marche arrière), N (neutre), D (marche avant automatique) et M (commande manuelle), ou inversement, et **en ce que** les signaux de contrôle de l'autre capteur de position (44) peuvent être branchés hors des positions P et D.

3. Dispositif de commande selon la revendication 1 ou 2, **caractérisé en ce qu'**au moins le capteur de position, pour la position M du levier de sélection (14), l'interrupteur à impulsion et l'autre capteur de position, sont des capteurs à effet Hall (30, 32, 34), ayant des aimants permanents (36, 44) déplaçables de façon correspondante au levier de sélection (14).

4. Dispositif de commande selon l'une ou plusieurs des revendications 1 à 3, **caractérisé en ce que** l'autre capteur de position ou aimant permanent (44) est disposé sur une persienne (18) couvrant la plage de pivotement du levier de sélection (coulisse 16).

5. Dispositif de commande selon l'une ou plusieurs des revendications 1 à 4, **caractérisé en ce qu'**est prévu un circuit d'évaluation (46), avec un générateur de fréquence (48) activant la fonction de défaut dans l'appareil de commande électronique (28) de la commande de boîte de vitesses.

6. Dispositif de commande selon l'une ou plusieurs des revendications 1 à 5, **caractérisé en ce que** l'information de défaut déclenche un signal d'avertissement acoustique et/ou optique.

7. Dispositif de commande selon l'une ou plusieurs des revendications 1 à 6, **caractérisé en ce que** l'avertissement de défaut est mémorisé dans une mémoire de défaut pouvant être lue.
